# EUROPEAN PATENT SPECIFICATION

(11) **EP 0 604 394 B1**
(45) Date of publication and mention of the grant of the patent: **09.04.1997**
(21) Application number: 94101329.4
(22) Date of filing: 10.01.1992
(51) Int. Cl.: H02P 5/172

(54) **Control circuit for a DC motor**
Steuerschaltung für einen Gleichstrommotor
Circuit de commande d'un moteur à courant continu

(30) Priority: 18.01.1991 JP 18382/91; 18.01.1991 JP 18384/91; 16.02.1991 JP 44370/91
(43) Date of publication of application: 29.06.1994
(62) Divisional of application: 92300257.0
(73) Proprietor: KABUSHIKI KAISHA RIKEN, Chiyoda-ku Tokyo 102 (JP)
(72) Inventor: Yaguchi, Osamu, c/o Kabushiki Kaisha Riken, Kashiwazaki-shi, Niigata-ken (JP); Arakawa, Mitsunori, c/o Kabushiki Kaisha Riken, Kashiwazaki-shi, Niigata-ken (JP)
(74) Representative: Jackson, David Spence

(56) References cited:
- EP-A- 0 345 914
- FR-A- 1 390 166
- FR-A- 1 452 353
- INSTR. AND EXPERIMENTAL TECHNIQUES, vol.28, no.5, 1985, N.Y. USA page 1225 I.V.BONDALETOVA & AL. 'Independent Power supply for electric discharge magnetic pump'
- PATENT ABSTRACTS OF JAPAN vol. 15, no. 490 (E-1144) 11 December 1991 & JP-A-03 212 190 (RIKEN CORP.) 17 September 1991

## Description

The present invention relates to a circuit for controlling a DC motor which is suitable for use in a driving window pane in a power window system of a vehicle.

Such a circuit is known from EP-A-0345914 and comprises:
a drive transistor connected to a DC motor via a relay terminal, the drive transistor and the motor being in series between supply lines ;
a detecting transistor for comparing a voltage that is produced on the relay terminal by the condition of the motor with an internal threshold voltage and providing an output to the drive transistor that maintains the ON state of the drive transistor if the produced voltage exceeds the threshold voltage, and that sets the drive transistor in its OFF state if the produced voltage is less than the threshold voltage.

Figure 1 shows a known circuit (described in JP-A-1-311883) for controlling a DC motor. A DC power supply 1 is connected between a Vcc line and a ground line GND. A DC motor 2 is connected between the Vcc line and a relay terminal 4 at the drain of an N-channel MOSFET 3 for driving the DC motor 2. The MOSFET 3 has its source connected to ground and its gate connected to the collector of a PNP transistor 5. The PNP transistor 5 has its emitter connected to the Vcc line and its base connected to an input terminal 6 via a resistor 7. When a negative trigger pulse P1 is supplied to the input terminal 6, the PNP transistor 5 is turned on, and this causes the MOSFET 3 turn on. The MOSFET 3 in its ON state provides a current to the DC motor 2 and the motor 2 rotates during the application of the negative trigger pulse.

A comparator 8 for maintaining the rotation of the DC motor 2 is connected between the Vcc line and ground via a supply bus not shown. The comparator has its inverting input connected to the relay terminal 4 or the drain of the MOSFET 3, its non-inverting input connected to a variable terminal of a variable resistor 9 connected between the Vcc line and ground, and an output connected to the gate of the MOSFET 3 via a resistor 10. The comparator 8 compares the terminal voltage V_{T} of the relay terminal 4 with the reference voltage V_{R}. The terminal voltage V_{T} is the remainder when the induced voltage V_{I} is subtracted from Vcc. The comparator 8 outputs a logical "H" when V_{T} < V_{R}. Therefore, once the negative trigger pulse P1 is applied to the trigger terminal 6, the MOSFET 3 is turned on, the drain voltage V_{T} at the terminal 4 becomes a saturated voltage lower than that of the reference voltage V_{R}, and the comparator provides "H" to the gate of the MOSFET 3 to latch the MOSFET 3 and to maintain rotation of the DC motor 2.

The DC motor 2 generates pulses each of having an absolute induced voltage V_{I} depending upon the rotation rate during the rotation thereof. Each pulse has a pair of negative and positive pulse components when a rotator of the DC motor 2 upon rotating comes to a predetermined angular position relative to a stator thereof. Even if the MOSFET 3 does not supply power to the rotating DC motor 2 for a moment, the rotor of DC motor 2 will rotate by inertia and will generate these pulses.

An NPN transistor 11 is provided to periodically turn off the MOSFET 3 to allow checking of the rotation of the DC motor 2 with the comparator 8. The NPN transistor 11 has its collector connected to the gate of MOSFET 3, its emitter connected to ground and its base connected to a clock terminal 12 via a resistor 13. Positive clock pulses P2 are periodically applied to the clock terminal 12 to provide comparison periods and the NPN transistor 11 is turned on to make the MOSFET 3 periodically turn off.

When a positive clock pulse is applied, the comparator 8 can compare the terminal voltage V_{T}, with reference voltage V_{R}. If V_{T} is lower than V_{R}, then the comparator 8 provides an "H" level to the gate of the MOSFET 3 throughout the compare period and the MOSFET 3 returns to the latch condition. If V_{T} is higher than V_{R}, then the comparator 8 provides an "L" level to the gate of the MOSFET 3 throughout the compare period and the MOSFET 3 remains turned off. Supposing that the DC motor 2 controlled by the MOSFET 3 drives a window glass to close a door window of the vehicle, the window glass moving up to close the window in response to the trigger pulse. The DC motor 2 continues to rotate by inertia notwithstanding the periodical positive clock pulses are applied, unless the window glass meets with an obstacle against the frame of the window.

If the periodical clocks are not applied to the terminal 12 and the window glass meets with an obstacle against the frame, the DC motor 2 continues to receive power and may damage the obstacle. Also, the coils of the DC motor 2 may be burned out by the current through the DC motor 2.

However, if the periodical clocks are applied to the terminal 12, the DC motor 2 does not generate the induced voltage when stopped, and the latch condition provided between the comparator 8 and the MOSFET 3 and for supplying the power thereto is released.

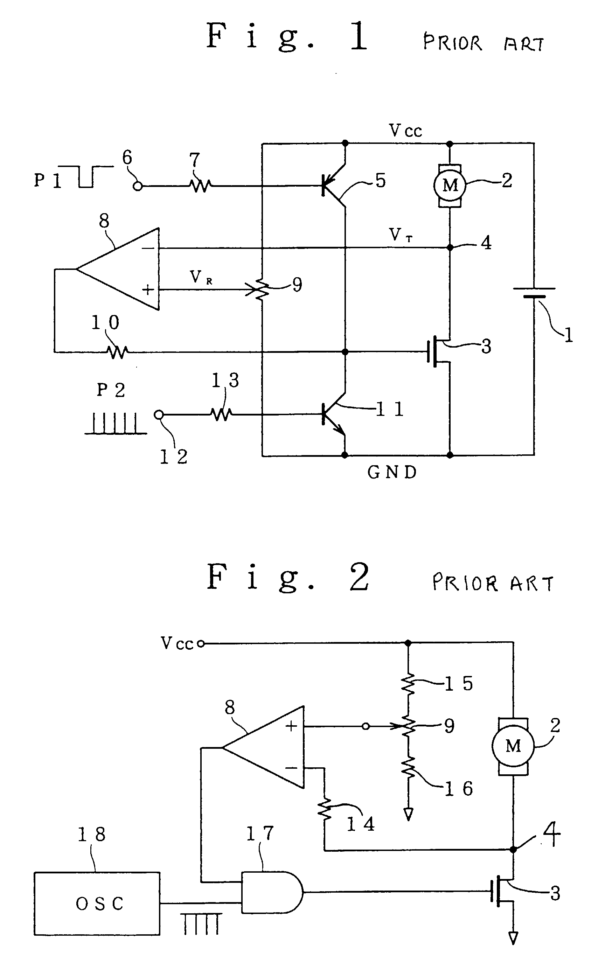

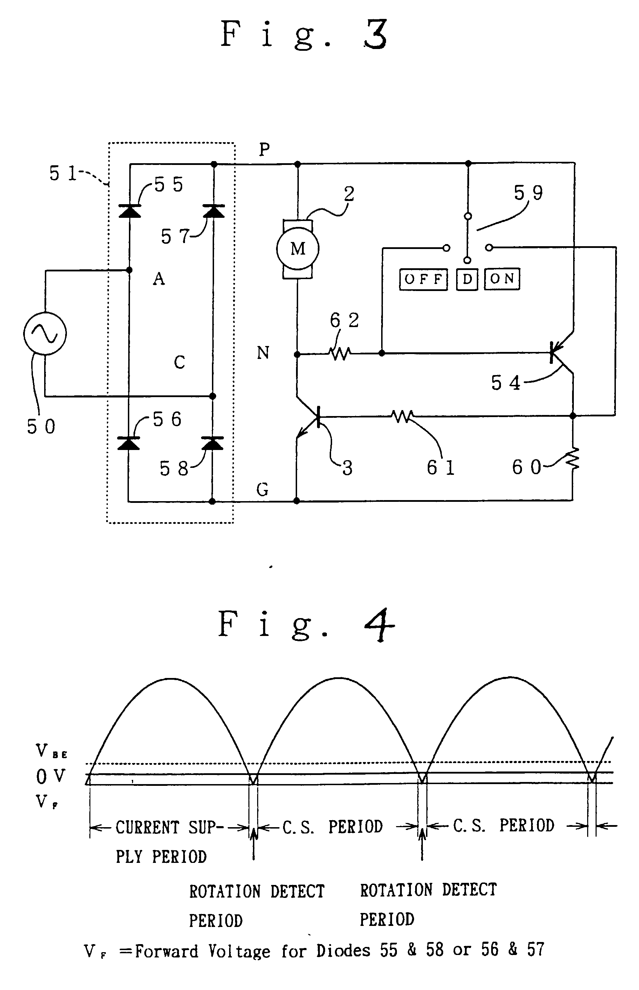

Referring now to Figure 2, a second known circuit for controlling a DC motor is shown. In Figure 2, components corresponding to those of Figure 1 have the same numerals respectively and their descriptions are omitted. A resistor 14 is connected between the relay terminal 4 and the inverting input of the comparator 8. Two resistors 15 and 16 each connected to one of the fixed terminals of the variable resistor 9 are connected to the Vcc line and ground respectively to provide a fine adjustment of the reference voltage V_{R} finer than that of Figure 1. The wired AND function by the resistor 10 and the NPN transistor 11 in Figure 1 is replaced by a 2 input AND gate 17. The AND gate 17 has its output connected to the gate of MOSFET 3, one input connected to the output of the comparator 8, and another input connected to an oscillator 18 for providing a negative periodical clock. Also, the PNP transistor 5 not shown in Figure 2 may be added with its collector connected to the gate of MOSFET 3, its emitter connected to the Vcc line and its base connected to the input terminal 6 via the resistor 7 as shown in Figure 1.

Operation of the second conventional control circuit for a DC motor as shown in Figure 2 is identical to that of Figure 1 and detailed description of the operation is omitted.

These control circuits are advantageous compared to a conventional circuit having a series resistor passing a supply current to a DC motor because the series resistor employed for monitoring DC motor current incurs serious current losses, which degrades the efficiency.

Such a motor 2 is generally employed as drive means for a power or automatic window, while a secondary battery is used such as the DC power supply of the vehicle. This battery has many electrical connections to equipment such as a cooler, a dynamo, head lights, a car-radio, etc. installed in the vehicle. The voltage of the Vcc line connected to the battery is undesirably changed when any equipment is turned on or off. This change in Vcc causes a change in the restraint torque of a DC motor, higher power supply voltage causing increase in the restraint torque, and lower power supply voltage causing decrease in restraint torque of the motor.

In Figures 1 and 2, a critical or minimum current Iₘᵢₙ for rotation of the DC motor 2 is given by:${\text{I}}_{\text{min}} {\text{= (Vcc - V}}_{\text{I}} {\text{) / Rm = V}}_{\text{R}} \text{/ Rm}$ wherein, Vcc denotes a power supply voltage, V_{I} denotes an induced voltage, and Rm denotes an internal resistance of the DC motor 2. Therefore, the restraint torque depends upon the critical current Iₘᵢₙ. The critical current changes with a change in the voltage V_{R} and therefore with a change of the power supply voltage Vcc.

The conventional DC motor 2 shown in Figure 1 or 2 generally needs a direct current (DC) power supply. In a vehicle such as an automobile, the DC power supply may be obtained from an AC power supply such as an alternating current generator or dynamo with a rectifying circuit providing a pulsating power supply from the AC power supply and a smoothing capacitor or battery smoothing the pulsating power. The oscillator 18 comprising an unstable multivibrator using a 555 available from Signetics (Registered Trade Mark) or a crystal oscillator and clock dividers, makes the circuit complex. The mean time between failures would be increased if the oscillator 18 were omitted. The power consumed in the control circuit by the pulse oscillator and comparator is not negligible.

It is an object of the invention to provide a control circuit for a DC motor without a pulse oscillator which makes a drive transistor for the DC motor periodically turn off.

According to the present invention there is provided a circuit for controlling a DC motor, comprising:
an AC power supply;
a rectifying means connected to the AC power supply and having a pair of supply output lines for supplying pulsating rectified power;
a bipolar drive transistor connected to a DC motor via a relay terminal, the bipolar drive transistor and the motor being in series between the supply lines;
means for supplying a starting signal to the bipolar drive transistor to establish an ON state of the bipolar drive transistor; and
a bipolar detecting transistor coupled to the relay terminal for comparing with an internal threshold voltage thereof a voltage that is produced by the condition of the motor between pulses of the rectified power and providing an output to the bipolar drive transistor that maintains the ON state of the bipolar drive transistor if the produced voltage exceeds the threshold voltage, and that sets the bipolar drive transistor in its OFF state if the produced voltage is less than the threshold voltage, and the means for supplying a starting signal including a switch having an OFF condition in which the switch sets the bipolar detecting transistor in its OFF state.

The present invention will now be described by way of example with reference to the accompanying drawings, in which:
Figures 1 and 2 are schematic diagrams showing conventional control circuits of DC motors;
Figure 3 is a schematic diagram of a circuit for controlling a DC motor in accordance with the invention; and
Figure 4 is a timing chart of the control circuit of Figure 3.

Referring now to Figure 3, an embodiment of the present invention for controlling a DC motor 2 is shown. The embodiment uses an AC power supply 50 such as dynamo. A pulsating current as shown in Figure 4 is produced by rectifying the output from AC power supply 50 and is supplied to the DC motor 2. A detecting period for periodically detecting a rotation speed or restraint torque of the DC motor 2 is provided within a period in which the voltage of the pulsating current approaches zero volts. This provides a simplified circuit with omission of the conventional oscillator, comparator and AND gate.

In Figure 3, the control circuit has a rectifying circuit 51 connected to the AC power supply 50 to provide a pulsating current to the DC motor 2, an NPN power drive transistor 3 for driving the DC motor 2, and a PNP detecting transistor 54 for detecting an induced voltage of the DC motor 2 and switching the drive transistor 3.

The AC power supply 50 is an AC generator such as a dynamo in case of the vehicle. Both lines of the AC supply 50 are connected to inputs A and C of the whole wave rectifying circuit 51 which has four rectifiers in the form of power diodes 55 to 58. The rectifying circuit 51 has a positive pulsating output line P connected to a common cathode of power diodes 55 and 57, and a negative pulsating output line G connected to a common anode of power diodes 56 and 58. The anode of the diode 55 and the cathode of the diode 56 are connected together to provide the input A while the anode of the diode 57 and the cathode of the diode 58 are connected together to provide the input C. Alternatively, in view of cost, one power diode may be used as the rectifying circuit 51.

The positive pulsating output line P is connected to one terminal of the DC motor 2, the emitter of the detecting PNP transistor 54, and a movable contact of a switch 59. The negative pulsating output line G is connected to the emitter of the drive transistor 3 and to one end of a resistor 60. A resistor 61 is connected between the base of the transistor 3 and the collector of the transistor 54. A resistor 62 is connected between the base of the transistor 54 and the collector of the transistor 3. The collector of the power transistor 3 is also connected to the other terminal of the DC motor 2.

The switch 59 has three fixed contacts, namely, an "ON" position contact connected to the collector of the transistor 54 for triggering the drive transistor 3, a "D" position contact with no connection, and an "OFF" position contact connected to the base of the transistor 54 for terminating operation of the motor 2.

Although in this embodiment an NPN power transistor is used as the drive transistor 3, an N-channel power MOSFET having a low gate voltage in the ON state, for example, 1 volt, may be substituted therefor. When the N-channel MOSFET is used, its drain is connected to the said other terminal of the DC motor 2, its gate is connected to the resistor 61 and its source connected to ground.

In an alternative embodiment having the one terminal of the DC motor 2 connected to negative pulsating output line G, a PNP power transistor or J-channel power MOSFET may be used with an NPN or N-channel detecting transistor.

Operation of the embodiment shown is as follows.

The DC motor 2 in its static condition does not generate an induced voltage V_{I}, i.e. V_{I} = 0 volts. The detecting transistor 54 remains in its OFF state because the required base to emitter voltage V_{BE} thereof is greater than V_{I}. The transistor 54 switches into its OFF state when for example the V_{BE} < 0.65 volts and then the drive transistor 3 remains in its OFF state.

When the DC motor 2 is rotated by setting of the movable contact of the switch 59 at the "ON" position, an induced voltage V_{I} is generated such that the potential V_{P} of the line P is higher than the potential V_{T} of the point N. If the V_{T} is lower than the V_{P} or V_{I} > V_{BE} at a predetermined speed of the DC motor 2, the detecting transistor 54 switches into its ON state, and then the drive transistor 3 is held in its ON state to maintain the rotation of the DC motor 2 by supplying drive current thereto. As the power supply voltage between the lines P and G is periodically zero as shown in Figure 4, the drive transistor 3 is periodically and momentarily turned off for a rotation checking period within which the supply voltage is for example between 0 to 0.65 volts.

The DC motor 2 can be supplied with the pulsating current when V_{I} is greater than V_{BE} as a result of rotation of the DC motor. This causes transistors 54 and 3 to be turned on at the subsequent current supplying period. However, when the DC motor 2 is in a restrained condition because the window glass is driven against an obstacle against the frame of the window, then V_{I} is equal to or less than the V_{BE}, of the detecting transistor 54, and there is not sufficient current flowing between the base and emitter of the detecting transistor 54 for the drive transistor 3 to be held in its ON state. Consequently the pulsating current is not supplied to the DC motor 2, and excessive load is not applied to both the DC motor 2 and the obstacle between the frame and the window glass driven by the DC motor 2.

The control circuit for the DC motor is triggered when the switch 59 is set to the ON position, and shuts off the DC motor 2 when the switch is at the OFF position. When the switch 59 is at the "D" position, the control circuit switches off the DC motor 2 if the DC motor 2 is restrained by an obstacle.

Though the collector and base currents of the transistors 3 and 54 are also changed according to the potential of the line P, the "ON" states of the transistors 3 and 54 are not changed unless the potential of the line P is higher than 0.65 volts. For example, the base current and then the collector currents of the drive transistor 3 is increased when the potential of the line P is raised, or vice versa. Therefore, a flywheel may be mounted to a shaft of the DC motor 2 to reduce wow or flutter of the rotation thereof.

The control circuit of the embodiment is distinguished from the circuits of Figures 1 and 2 in that a pulsating current power supply is provided by the AC power supply. The pulse oscillator, the comparator, and the AND gate of Fig. 2 and smoothing means for the pulsating power supply are not necessary. Therefore, there are many advantages: the control circuit is simplified with higher reliability and lower cost than the former, and there is no series resistor passing supply current to the DC motor.

## Claims

1. A circuit for controlling a DC motor, comprising:
an AC power supply (50);
a rectifying means (51) connected to the AC power supply (50) and having a pair of supply output lines (P,G) for supplying pulsating rectified power;
a bipolar drive transistor (3) connected to a DC motor (2) via a relay terminal (N), the bipolar drive transistor (3) and the motor (2) being in series between the supply lines (P,G);
means (59) for supplying a starting signal to the bipolar drive transistor (3) to establish an ON state of the bipolar drive transistor (3); and
a bipolar detecting transistor (54) coupled to the relay terminal (N) for comparing with an internal threshold voltage (V_{BE}) thereof a voltage (V₁) that is produced by the condition of the motor (2) between pulses of the rectified power and providing an output to the bipolar drive transistor (3) that maintains the ON state of the bipolar drive transistor (3) if the produced voltage (V₁) exceeds the threshold voltage (V_{BE}), and that sets the bipolar drive transistor (3) in its OFF state if the produced voltage (V₁) is less than the threshold voltage (V_{BE}), and the means for supplying a starting signal including a switch (59) having an OFF condition in which the switch (59) sets the bipolar detecting transistor (54) in its OFF state.

2. A circuit according to claim 1, characterised in that the DC motor (2) has one terminal thereof connected to a positive one (P) of the supply lines; the drive transistor (3) is an NPN transistor having its emitter connected to a negative one (G) of the supply lines, and its collector connected to the other terminal of the DC motor (2); and the detecting transistor (54) is a PNP transistor having its emitter connected to the positive line (P), its base connected to the said other terminal of the DC motor (2) via a resistor (62), and its collector connected to the negative line (G) via a second resistor (60) and to the base of the NPN drive transistor (3) via a third resistor (61), the base of the detecting transistor (54) being also connected directly to an OFF contact of the said switch (59).

3. A circuit according to claim 2, characterised in that the rectifying means is in the form of a diode bridge (51) having its diodes (55,56,57,58) arranged to pass current from the negative line (G) to the positive line (P).

## Patentansprüche

1. Steuerschaltung für einen Gleichstrommotor mit:
einer Wechselstromleistungsversorgung (50);
mit der Wechselstromleistungsversorgung (50) verbundene Gleichrichtermittel (51), die ein Versorgungsausgangsleitungspaar (P,G) aufweisen, um pulsierende, gleichgerichtete Leistung zu liefern;
einem über einen Relaisanschluß (N) mit einem Gleichstrommotor (2) verbundenen bipolaren Treibertransistor (3), der zwischen den Versorgungsleitungen (P,G) mit dem Motor (2) in Serie geschaltet ist;
Mitteln (59) zur Lieferung eines Startsignals an den bipolaren Treibertransistor (3), um einen EIN-Zustand des bipolaren Treibertransistors (3) festzulegen; und
einem mit dem Relaisanschluß (N) gekoppelten bipolaren Detektionstransistor (54), um eine in Abhängigkeit vom Zustand des Motors (2) erzeugte Spannung (V₁) zwischen den Pulsen der gleichgerichteten Leistung mit einer internen Schwellenspannung (V_{BE}) zu vergleichen und ein Ausgangssignal für den bipolaren Treibertransistor (3) zur Verfügung zu stellen, das den EIN-Zustand des bipolaren Teibertransistors (3) festlegt, falls die erzeugte Spannung (V₁) die Schwellenspannung (V_{BE}) überschreitet und den bipolaren Treibertransistor (3) in seinen AUS-Zustand setzt, falls die erzeugte Spannung (V₁) kleiner als die Schwellenspannung (V_{BE}) ist, wobei die Mittel zur Lieferung eines Startsignals einen Schalter (59) mit einem AUS-Zustand enthalten, bei dem der Schalter (59) den bipolaren Detektionstransistor (54) in seinen AUS-Zustand setzt.

2. Schaltung nach Anspruch 1, **dadurch gekennzeichnet,** daß der Gleichstrommotor (2) einen Anschluß aufweist, der mit einem positiven Anschluß (P) der Versorgungsleitungen verbunden ist; der Treibertransistor (3) als NPN-Transistor ausgebildet ist, dessen Emitter mit einem negativen Anschluß (G) der Versorgungsleitungen und dessen Kollektor mit dem anderen Anschluß des Gleichstrommotors (2) verbunden ist; der Detektionstransistor (54) als PNP-Transistor ausgebildet ist, dessen Emitter mit der positiven Leitung (P) , dessen Basis über einen Widerstand (62) mit dem besagten anderen Anschluß des Gleichstrommotors (2), und dessen Kollektor über einen zweiten Widerstand (60) mit der negativen Leitung (G) und über einen dritten Widerstand (61) mit der Basis des NPN-Treibertransistors (3) verbunden ist, wobei die Basis des Detektionstransistors (54) ebenfalls direkt mit einem AUS-Kontakt des Schalters (59) verbunden ist.

3. Schaltung nach Anspruch 2, **dadurch gekennzeichnet,** daß die Gleichrichtermittel als Diodenbrücke (51) ausgebildet sind, bei der die Dioden (55, 56, 57, 58) so angeordnet sind, daß von der negativen Leitung (G) zur positiven Leitung (P) Strom fließen kann.

## Revendications

1. Circuit pour commander un moteur à courant continu, comprenant :
une alimentation de courant alternatif (50) ;
un moyen de redressement (51) connecté à l'alimentation de courant alternatif (50) et ayant une paire de lignes de sortie d'alimentation (P, G) pour fournir l'alimentation redressée pulsée ;
un transistor de pilotage bipolaire (3) connecté à un moteur à courant continu (2) via un borne de relais (N), le transistor de pilotage bipolaire (3) et le moteur (2) étant en série entre les lignes d'alimentation (P, G) ;
un moyen (59) pour fournir un signal de démarrage au transistor de pilotage bipolaire (3) pour établir un état conducteur du transistor de pilotage bipolaire (3) ; et
un transistor de détection bipolaire (54) couplé à la borne de relais (N) pour comparer avec une tension de seuil interne (V_{BE}) de celui-ci, une tension (V₁) qui est produite par l'état du moteur (2) entre des impulsions d'alimentation redressées et pour fournir une sortie au transistor de pilotage bipolaire (3) qui maintient l'état conducteur du transistor de pilotage bipolaire (3) si la tension produite (V₁) dépasse la tension de seuil (V_{BE}) et qui met le transistor de pilotage bipolaire (3) dans son état bloqué si la tension produite (V₁) est inférieure à la tension de seuil (V_{BE}), et le moyen pour fournir un signal de démarrage comprenant un commutateur (59) ayant un état ouvert dans lequel le commutateur (59) met le transistor de détection bipolaire (54) dans son état bloqué.

2. Circuit selon la revendication 1, caractérisé en ce que le moteur à courant continu (2) a une borne de celui-ci connecté à une ligne positive (P) des lignes d'alimentation ; le transistor de pilotage (3) est un transistor NPN ayant son émetteur connecté à une ligne négative (G) des lignes d'alimentation, et son collecteur connecté à l'autre borne du moteur à courant continu (2) ; et le transistor de détection (54) est un transistor PNP ayant son émetteur connecté à la ligne positive (P), sa base connectée à ladite autre borne du moteur à courant continu (2) via une résistance (62) et son collecteur connecté à la ligne négative (G) via une seconde résistance (60) et à la base du transistor de pilotage NPN (3) via une troisième résistance (61), la base du transistor de détection (54) étant aussi connecté directement au contact ouvert dudit commutateur (59).

3. Circuit selon la revendication 2, caractérisé en ce que le moyen de redressement est sous la forme d'un pont de diode (51) ayant ces diodes (55, 56, 57, 58) disposées pour passer un courant de la ligne négative (G) à la ligne positive (P).
